# EUROPÄISCHE PATENTANMELDUNG

(11) **EP 0 801 440 A2**
(43) Veröffentlichungstag der Anmeldung: **15.10.1997**
(21) Anmeldenummer: 97102466.6
(22) Anmeldetag: 15.02.1997
(51) Int. Cl.: H01R 13/447

(54) **Klappdeckel-Anordnung für Elektro-Installationsgeräte**

(30) Priorität: 12.04.1996 DE 29606671 U
(71) Anmelder: GIRA GIERSIEPEN GmbH. & CO. KG., D-42477 Radevormwald (DE)
(72) Erfinder: Panknin, Jürgen, 42477 Radevormwald (DE)
(74) Vertreter: Patentanwälte Dr. Solf & Zapf

(57) **Zusammenfassung**

Die vorliegende Erfindung betrifft eine Klappdeckel-Anordnung (1) für Elektro-Installationsgeräte, inbesondere Steckdosen, bestehend aus einem Trägerelement (4) und einem mit dem Trägerelement (4) über eine Schwenklagerung (6) schwenkbeweglich verbundenen Klappdeckel (2) mit einer federkraftbedingten, durch mindestens eine Schließfeder (12) bewirkten Schließlage. Die Schließfeder (12) ist als Druckfeder ausgebildet ist.

## Beschreibung

Die vorliegende Erfindung betrifft eine Klappdeckel-Anordnung für Elektro-Installationsgeräte, inbesondere Steckdosen, bestehend aus einem Trägerelement und einem mit dem Trägerelement über eine Schwenklagerung schwenkbeweglich verbundenen Klappdeckel mit einer federkraftbedingten, durch mindestens eine Schließfeder bewirkten Schließlage.

Derartige Klappdeckelanordnungen sind vor allem bei Steckdosen, insbesondere bei Feuchtraum-Steckdosen, vorgesehen. Üblicherweise ist der Klappdeckel mittels einer gesteckten Achse an dem Gerät bzw. an einem geräteseitigen Trägerelement schwenkbar befestigt. Als Schließfeder ist mindestens eine gewundene Schenkelfeder vorgesehen, die die Achse umschließt und mit jeweils einem Federschenkel einerseits am Klappdeckel und andererseits am Gerät bzw. an dem Trägerelement anliegt. Bei solchen Federn handelt es sich um Torsionsfedern, die wegen ihrer Bauform und ihrer Torsionsbewegungen relativ viel Einbauraum benötigen. Außerdem ergibt sich eine relativ aufwendige Herstellung und Montage. Zudem haben sich ihre über den Federweg sehr ungleichmäßige Kennlinie sowie ihr sogenanntes "Setzverhalten" als nachteilig herausgestellt, was bedeutet, daß solche SchenkelTorsionsfedern mit der Zeit ihre Federkraft zum Teil verlieren. In der speziellen Verwendung führt dies zu dem gravierenden Nachteil, daß der Klappdeckel nicht mehr sicher in seiner Schließlage gehalten wird.

Der vorliegenden Erfindung liegt daher die Aufgabe zugrunde, eine Klappdeckel-Anordnung der genannten Art so zu verbessern, daß eine ordnungsgemäße Funktion, insbesondere die Schließfunktion des Klappdeckels, über längere Gebrauchszeiten hinweg optimal gewährleistet ist, wobei vorzugsweise eine besonders kompakte, flache Bauform sowie eine konstruktive Vereinfachung bei preiswerter Herstellung und Montage erreicht werden sollen.

Erfindungsgemäß wird dies dadurch erreicht,daß die Schließfeder als Druckfeder ausgebildet ist, die hierbei zweckmäßigerweise gegen einen Betätigungsansatz des Klappdeckels wirkt. Dieser Betätigungsansatz ist derart auf der dem Klappdeckel abgekehrten Seite der Schwenkachse angeordnet, daß er beim Öffnen des Klappdeckels wippenartig gegen die Schließfeder verschwenkt wird. Hierdurch wird die Schließfeder stärker vorgespannt. Sie wirkt (drückt) dann mit ihrer Federkraft zum Schließen des Klappdeckels gegen den Betätigungsansatz, so daß dieser zurückverschwenkt und der Klappdeckel auf diese Weise verschlossen und dann auch sicher in seiner Schließlage gehalten wird.

Als Druckfeder wird bevorzugt eine Schraubenfeder verwendet. Druckfedern - insbesondere Schraubenfedern - haben vorteilhafterweise eine sehr günstige, über den Federweg sehr gleichmäßige (vorzugsweise lineare) und konstante Federcharakteristik. Es würde grundsätzlich eine einzelne Schließfeder ausreichen, es ist jedoch besonders zweckmäßig, zwei gleichartige Schließfedern mit Abstand und bezüglich ihrer Kraftwirkrichtung parallel zueinander und gleichgerichtet vorzusehen. Der Klappdeckel weist natürlich für jede Schließfeder einen separaten Betätigungsansatz auf.

Grundsätzlich ist die Anordnung der (jeder) Schließfeder bezüglich ihrer Kraftwirkrichtung weitgehend beliebig. Es ist aber besonders vorteilhaft, die Schließfeder bezüglich ihrer Kraftwirkrichtung (Druckrichtung) derart anzuordnen, daß der Klappdeckel in einer - für den jeweiligen Zugriff zumindest erforderlichen - Öffnungsstellung im wesentlichen rechtwinklig, d.h. in einem Winkel von etwa 90°, zur Kraftwirkrichtung verläuft. Da zweckmäßigerweise der Klappdeckel in der Öffnungsstellung auch im wesentlichen rechtwinklig zu einer geräteseitigen Montageebene des Trägerelementes verläuft, ergibt sich, daß die Schließfeder bezüglich ihrer Kraftwirkrichtung bevorzugt im wesentlichen parallel zu der Montageebene angeordnet ist.

Entsprechend der Anordnung ihrer Kraftwirkrichtung ist die/jede Schließfeder zweckmäßigerweise in einer randoffenen Aufnahme des Trägerelementes angeordnet. Der jeweilige Betätigungsansatz des Klappdeckels liegt in der Schließlage zur Halterung der Schließfeder im Bereich vor der Aufnahme und wird beim Öffnen des Klappdeckels - bedingt durch die Lage der Schwenkachse - wippenartig gegen die Schließfeder in die Aufnahme hinein verschwenkt.

Durch die als bevorzugt beschriebene, spezielle Lage der/jeder Schließfeder kann vorteilhafterweise das diese aufnehmende Trägerelement sehr flach als Platten- oder Rahmenelement ausgebildet sein, woraus sich auch eine vorteilhaft geringe Bauhöhe der gesamten Klappdeckel-Anordnung (im geschlossenen Zustand) ergibt. Hieraus resultiert zudem der wichtige Vorteil, daß das Trägerelement - in den senkrecht zur Montageebene verlaufenden Richtungen gesehen - im wesentlichen öffnungsfrei ausgebildet sein kann, und zwar zumindest in einem umlaufenden Randbereich, so daß auf einfache Weise eine Abdichtung zwischen dem - als Abdeckplatte oder -rahmen ausgebildeten - Trägerelement und weiteren Teilen eines Installationsgerätes gewährleistet werden kann.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im folgenden die Erfindung nun näher erläutert werden. Dabei zeigen:
- Fig. 1: eine perspektivische Explosionsdarstellung der Einzelteile der erfindungsgemäßen Klappdeckel-Anordnung,
- Fig. 2: eine Perspektivansicht der Klappdeckel-Anordnung im montierten, geschlossenen Zustand,
- Fig. 3: einen Querschnitt längs der Linie III-III in Fig. 2,
- Fig. 4: eine Perspektivansicht der Klappdeckel-Anordnung im geöffneten Zustand des Klappdeckels und
- Fig. 5: einen Querschnitt analog zu Fig. 3 in der geöffneten Stellung gemäß Fig. 4.

In den verschiedenen Figuren der Zeichnung sind gleiche Teile stets mit den gleichen Bezugszeichen versehen, so daß sie in der Regel auch jeweils nur einmal beschrieben werden.

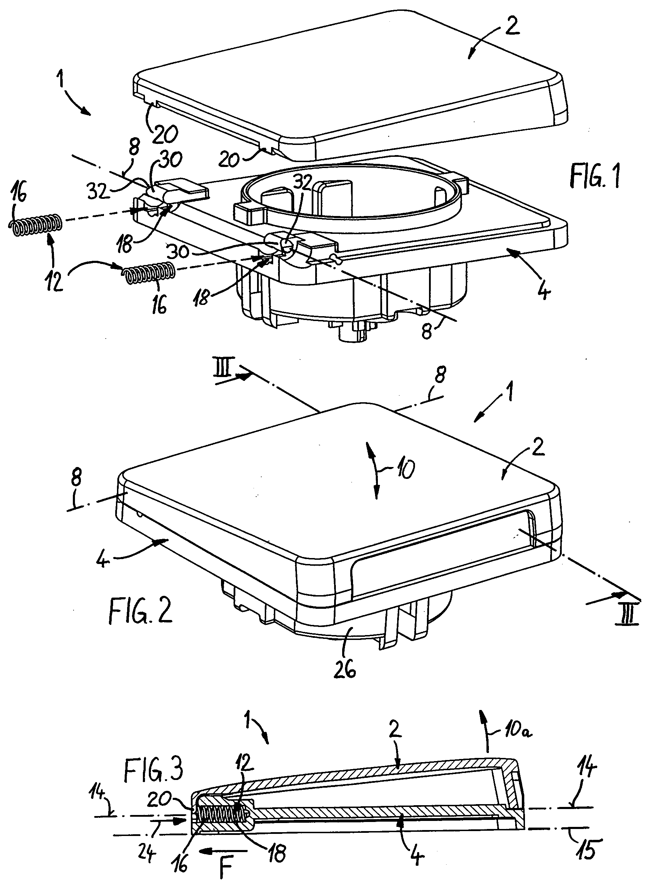

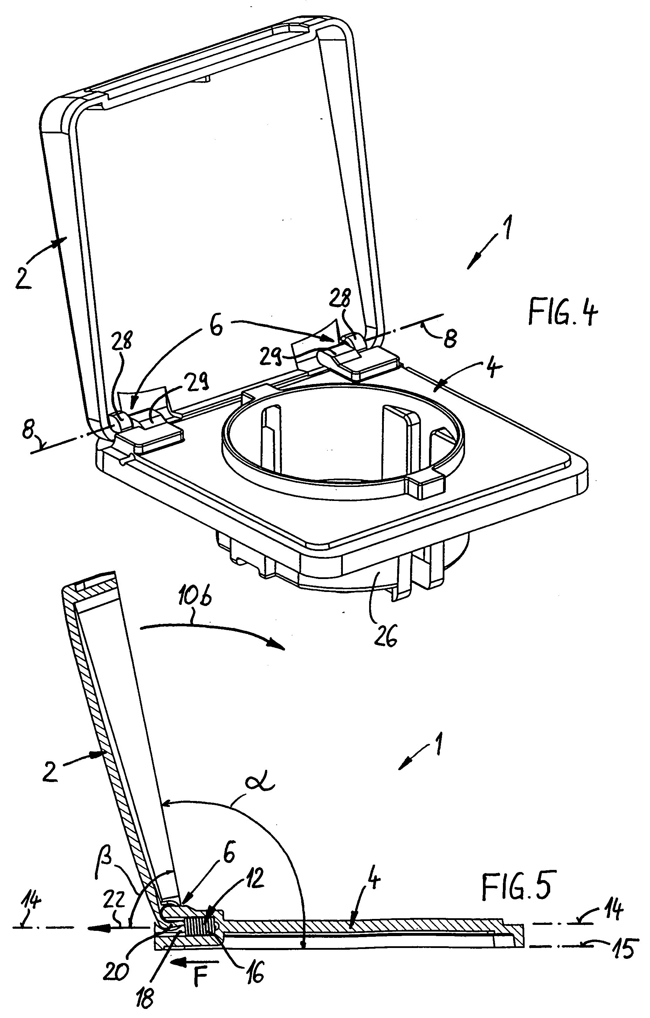

Wie sich aus jeder der Zeichnungsfiguren ergibt, besteht eine erfindungsgemäße Klappdeckel-Anordnung 1 aus einem Klappdeckel 2, der mit einem Trägerelement 4 schwenkbeweglich verbunden ist. Hierzu ist eine Schwenklagerung 6 vorgesehen (siehe insbesondere Fig. 4), die eine Schwenkachse 8 (Fig. 1, 2 und 4) definiert, um die der Klappdeckel 2 in Doppelpfeilrichtung 10 gemäß Fig. 2 verschwenkbar ist, d.h. ausgehend von der in Fig. 3 dargestellten Schließlage kann er in Pfeilrichtung 10a geöffnet sowie ausgehend von der in Fig. 5 veranschaulichten Öffnungsstellung federkraftbedingt in Pfeilrichtung 10b geschlossen werden.

Die in Fig. 2 und 3 veranschaulichte Schließlage des Klappdeckels 2 wird durch mindestens eine Schließfeder 12 bewirkt. In dieser Schließlage definiert der Klappdeckel 2 durch seine Anlage an dem Trägerelement 4 eine Schließebene 14 (Fig. 3 und 5). In Fig. 4 und 5 ist eine Öffnungsstelldung des Klappdeckels 2 veranschaulicht; zum Zugriff auf/in eine durch den Klappdeckel 2 zu verschließende Öffnung, beispielsweise zum Einstecken eines nicht dargestellten Steckers oder zum Betätigen bestimmter Funktionselemente, reicht es in der Regel aus, den Klappdeckel 2 in eine "Mindest-Öffnungsstellung" zu bringen, in der er vorzugsweise im wesentlichen rechtwinklig, d.h. in einem Winkel α von etwa 90°, zu einer geräteseitigen Montageebene 15 des Trägerelementes 4 steht (siehe Fig. 5). Bei der dargestellten Ausführung verlaufen die Schließebene 14 und die Montageebene 15 parallel, was aber nicht obligatorisch ist, sondern die Schließebene 14 kann auch in einem bestimmten (spitzen) Winkel zur Montagebene 15 verlaufen.

Erfindungsgemäß ist vorgesehen, daß die bzw. jede Schließfeder 12 als Druckfeder ausgebildet und bezüglich ihrer Kraftwirkrichtung - vgl. die Pfeile F in Fig. 3 und 5 - bevorzugt im wesentlichen rechtwinklig, d.h. in einem Winkel β von etwa 90°, zu dem Klappdeckel 2 in dessen "Mindest-Öffnungsstellung" angeordnet ist (siehe Fig. 5).

Im dargestellten, bevorzugten Ausführungsbeispiel der Erfindung sind zwei Schließfedern 12 vorgesehen. Vorzugsweise ist - wie dargestellt - die/ jede Schließfeder 12 als Schraubenfeder 16 ausgebildet, es könnte grundsätzlich aber auch eine andere Art von Druckfeder, beispielsweise eine Blattfeder, vorgesehen sein. Die bevorzugt vorgesehenen zwei Schraubenfedern 16 sind mit Abstand bezüglich ihrer Kraftwirkrichtung F parallel zueinander gleichgerichtet angeordnet.

Die/jede Schließfeder 12 ist in einer im wesentlichen nur in der der Kraftwirkung F entsprechenden Richtung nach außen randoffenen Aufnahme 18 des Trägerelementes 4 angeordnet. Der Klappdeckel 2 weist für die/jede Schließfeder 12 einen hebelartigen, gegen die Schließfeder 12 wirkenden Betätigungsansatz 20 auf. Jeder Betätigungsansatz 20 überdeckt in der Schließlage des Klappdeckels 2 die nach außen führende Mündungsöffnung der jeweiligen Aufnahme 18 des Trägerelementes 4 derart zumindest teilweise, daß hierdurch die jeweilige Schließfeder 12 durch Anlage an dem Betätigungsansatz 20 in der Aufnahme 18 gehalten wird. Beim Öffnen des Klappdeckels 2 greift der jeweilige Betätigungsansatz 20 gegen die Schließfeder 12 in die Aufnahme 18 ein (siehe Fig. 5). Hierdurch wird die Schließfeder 12 stärker vorgespannt, so daß sich ihre Kraft F erhöht und sie nachfolgend aufgrund ihrer Anlage an dem Betätigungsansatz 20 diesen in Pfeilrichtung 22 gemäß Fig. 5 bewegen kann, wodurch sich der Klappdeckel 2 in Pfeilrichtung 10b schließt. Die umgekehrte Bewegung des Betätigungsansatzes 20 beim Öffnen des Klappdeckels 2 in Pfeilrichtung 10a ist in Fig. 3 mit einem Pfeil 24 veranschaulicht.

Aufgrund der erfindungsgemäßen Ausgestaltung sowie der bevorzugten Anordnung (Orientierung) der Schließfeder(n) 12 kann das Trägerelement 4 vorteilhafterweise als flaches, vorzugsweise rechtwinkliges, insbesondere wie dargestellt im wesentlichen quadratisches, Platten- oder Rahmenelement ausgebildet sein. Zudem ergibt sich die Möglichkeit, daß das flache, platten- oder rahmenförmige Trägerelement 4 zumindest in einem umlaufenden Randbereich - in zur Montageebene 15 im wesentlichen senkrechter Richtung gesehen - durchgehend öffnungsfrei ausgebildet sein kann. Hierdurch eignet sich das Trägerelement 4 aufgrund der Erfindung als Abdeckplatte bzw. Abdeckrahmen insbesondere für Feuchtraum-Geräte, da auf einfache Weise ein gute Abdichtung zwischen dem Trägerelement 4 und weiteren, nicht dargestellten Geräteteilen erreicht werden kann. Zudem führt die flache Ausführung auch zu einer geringen Bauhöhe der gesamten Klappdeckel-Anordnung 1; siehe insbesondere Fig. 2 und 3.

Im dargestellten Ausführungsbeispiel (s. Fig. 1 und 4) ist das Trägerelement 4 für eine bevorzugte Anwendung bei Feuchtraum-Steckdosen einheitlich mit einem sogenannten "Schukotopf" 26 ausgebildet (Schuko = Schutzkontakt).

Gemäß Fig. 4 ist die Schwenklagerung 6 zweckmäßigerweise von jeweils vorzugsweise einstückig angeformten Lageransätzen 28, 29 des Klappdeckels 2 und des Trägerelementes 4 gebildet. Vorzugsweise ist hierbei zur Verbindung der beiden Teile eine Verrastung ohne gesonderte Verbindungselemente, wie Schrauben, Bolzen, Niete, Achsen oder dergleichen, vorgesehen. Vorzugsweise besteht die Schwenklagerung 6 aus zwei voneinander beabstandeten, entsprechend der Verlaufsrichtung der Schwenkachse 8 in entgegengesetzte Richtungen weisenden Schwenkzapfen 30 (siehe insbesondere Fig. 1) sowie zwei die Schwenkzapfen 30 mit geringem Spiel, jedoch drehbar aufnehmenden Lageröffnungen, die in der Zeichnung nicht erkennbar und daher auch nicht bezeichnet sind. Jedoch ergibt sich aus Fig. 4, daß die Schwenkzapfen 30 im montierten Zustand in die Lageröffnungen eingreifen, weshalb sie in Fig. 4 nicht erkennbar sind. In der bevorzugten Ausführungsform sind die beiden Paare von Schwenkzapfen und Lageröffnungen an einem Seitenrand der im wesentlichen quadratischen Anordnung und vorzugsweise jeweils in der Nähe der Eckbereiche angeordnet. Im dargestellten, bevorzugten Ausführungsbeispiel sind die Schwenkzapfen 30 Bestandteile des Trägerelementes 4, während der Klappdeckel 2 die Lageröffnungen aufweist.

Gemäß Fig.1 ist zudem vorzugsweise vorgesehen, daß die Aufnahmen 18 des Trägerelementes 4 mit den darin untergebrachten Schließfedern 12 jeweils in nächster Nähe der Schwenklagerungen, d.h. der Schwenkzapfen und Lageröffnungen, angeordnet sind. Insbesondere erstrecken sich die Aufnahmen 18 jeweils "unterhalb" der Schwenkzapfen 30 in das Material des Trägerelementes 4 hinein (Fig. 1).

Für die bevorzugt vorgesehene Rastverbindung zwischen dem Trägerelement 4 und dem Klappdeckel 2 ist es vorteilhaft, wenn zumindest einer der beiden Schwenkzapfen 30 - wie dargestellt bevorzugt beide Schwenkzapfen 30 - zum Einrasten in die zugehörige Lageröffnung eine Einführ-Schrägfläche 32 aufweist, was in Fig. 1 zu erkennen ist.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Klappdeckel-Anordnung (1) für Elektro-Installationsgeräte, inbesondere Steckdosen, bestehend aus einem Trägerelement (4) und einem mit dem Trägerelement (4) über eine Schwenklagerung (6) schwenkbeweglich verbundenen Klappdeckel (2) mit einer federkraftbedingten, durch mindestens eine Schließfeder (12) bewirkten Schließlage (Fig. 2,3)
**dadurch gekennzeichnet,** daß die Schließfeder (12) als Druckfeder ausgebildet ist.

2. Klappdeckel-Anordnung nach Anspruch 1,
**dadurch gekennzeichnet,** daß die Schließfeder (12) gegen einen hebelartigen, bei Bewegung des Klappdeckels (2) wippenartig verschwenkten Betätigungsansatz (20) des Klappdeckels (2) wirkt.

3. Klappdeckel-Anordnung nach Anspruch 1 oder 2,
**dadurch gekennzeichnet,** daß die Schließfeder (12) als Schraubenfeder (16) ausgebildet ist.

4. Klappdeckel-Anordnung nach einem oder mehreren der Ansprüche 1 bis 3,
**dadurch gekennzeichnet,** daß die Schließfeder (12) bezüglich ihrer Kraftwirkrichtung (F) derart angeordnet ist, daß der Klappdeckel (2) in einer zum Zugriff mindestens erforderlichen Öffnungsstellung im wesentlichen rechtwinklig zur Kraftwirkrichtung (F) verläuft.

5. Klappdeckel-Anordnung nach einem oder mehreren der Ansprüche 1 bis 4,
**dadurch gekennzeichnet,** daß die Schließfeder (12) bezüglich ihrer Kraftwirkrichtung (F) im wesentlichen parallel zu einer geräteseitigen Montageebene (15) des Trägerelementes (4) angeordnet ist.

6. Klappdeckel-Anordnung nach einem oder mehreren der Ansprüche 1 bis 5,
**dadurch gekennzeichnet,** daß zwei gleichartig ausgebildete Schließfedern (12) mit Abstand und bezüglich ihrer Kraftwirkrichtung (F) parallel zueinander vorgesehen sind.

7. Klappdeckel-Anordnung nach einem oder mehreren der Ansprüche 1 bis 6,
**dadurch gekennzeichnet,** daß die bzw. jede Schließfeder (12) in einer randoffenen Aufnahme (18) des Trägerelementes (4) angeordnet ist.

8. Klappdeckel-Anordnung nach Anspruch 7,
**dadurch gekennzeichnet,** daß der Betätigungsansatz (20) des Klappdeckels (2) in dessen Schließlage (Fig. 2,3) die Aufnahme (18) des Trägerelementes (4) zur Halterung der Schließfeder (12) zumindest teilweise verschließt und beim Öffnen des Klappdeckels (2) gegen die Schließfeder (12) in die Aufnahme (18) eingreift.

9. Klappdeckel-Anordnung nach einem oder mehreren der Ansprüche 1 bis 85,
**dadurch gekennzeichnet,** daß das Trägerelement (4) als flaches Platten- oder Rahmenelement ausgebildet ist und zumindest in einem umlaufenden Randbereich - in zur Montageebene (15) senkrechter Richtung gesehen - vorzugsweise durchgehend öffnungsfrei ausgebildet ist.

10. Klappdeckel-Anordnung nach einem oder mehreren der Ansprüche 1 bis 9,
**dadurch gekennzeichnet,** daß die Schwenklagerung (6) von jeweils vorzugsweise einstückig angeformten Lageransätzen (28,29) des Trägerelementes (4) und des Klappdeckels (2) gebildet ist, wobei zur Verbindung insbesondere eine Verrastung vorgesehen ist.

11. Klappdeckel-Anordnung nach einem oder mehreren der Ansprüche 1 bis 10,
**dadurch gekennzeichnet,** daß die Schwenklagerung (6) aus zwei voneinander beabstandeten, entsprechend der Verlaufsrichtung der Schwenkachse (8) in entgegengesetzte Richtungen weisenden Schwenkzapfen (30) und zwei die Schwenkzapfen (30) aufnehmenden Lageröffnungen besteht.

12. Klappdeckel-Anordnung nach Anspruch 11,
**dadurch gekennzeichnet,** daß die Schwenkzapfen (30) Bestandteile des Trägerelementes (4) und die Lageröffnungen des Klappdeckels (2) sind.

13. Klappdeckel-Anordnung nach Anspruch 8 und 9,
**dadurch gekennzeichnet,** daß die Aufnahmen (18) des Trägerelementes (4) mit den darin untergebrachten Schließfedern (12) jeweils in den Bereichen der Schwenkzapfen (30) und Lageröffnungen angeordnet sind.

14. Klappdeckel-Anordnung nach einem oder mehreren der Ansprüche 11 bis 13,
**dadurch gekennzeichnet,** daß zumindest einer der Schwenkzapfen (30) zum Einrasten in die Lageröffnung eine Einführ-Schrägfläche (32) aufweist.
